# EUROPÄISCHE PATENTSCHRIFT

(11) **EP 3 362 516 B1**
(45) Veröffentlichungstag und Bekanntmachung des Hinweises auf die Patenterteilung: **06.11.2019**
(21) Anmeldenummer: 16775137.9
(22) Anmeldetag: 22.09.2016
(51) Int. Cl.: C08L 67/02, C08L 67/04, C08K 5/5313

(54) **POLYESTERBLEND MIT HALOGENFREIEM FLAMMSCHUTZ**
POLYESTER BLEND WITH HALOGEN-FREE FLAME PROTECTION
MELANGE DE POLYESTER CONTENANT UN AGENT IGNIFUGE SANS HALOGENE

(30) Priorität: 14.10.2015 EP 15189683
(43) Veröffentlichungstag der Anmeldung: 22.08.2018
(73) Patentinhaber: BASF SE, 67056 Ludwigshafen am Rhein (DE)
(72) Erfinder: WAGNER, Sebastian, 68167 Mannheim (DE); KRAEMER, Roland Helmut, Shanghai 200120 (CN)
(74) Vertreter: BASF IP Association
(86) Internationale Anmeldenummer: PCT/EP2016/072569
(87) Internationale Veröffentlichungsnummer: WO 2017/063841

(56) Entgegenhaltungen:
- EP-A1- 2 476 730
- EP-A2- 1 935 944

## Beschreibung

Die Erfindung betrifft thermoplastische Formmassen, enthaltend
A) 10 bis 99 Gew.-% eines thermoplastischen Polyesters, verschieden von C)
B) 0,1 bis 30 Gew.-% eines Poly(ε-Caprolactons)
C) 0,1 bis 30 Gew.-% eines biologisch abbaubaren Polyesters, verschieden von B)
D) 0,1 bis 30 Gew.-% eines Phosphinsäuresalzes
E) 0 bis 20 Gew.-% eines stickstoffhaltigen Flammschutzmittels
F) 0 bis 15 Gew.-% eines aromatischen Phosphatesters mit mindestens einem alkylsubstituierten Phenylring
G) 0 bis 50 Gew.-% weiterer Zusatzstoffe,
wobei die Summe der Gewichtsprozente der Komponenten A) bis G) 100 % ergibt.

Weiterhin betrifft die Erfindung die Verwendung der thermoplastischen Formmassen zur Herstellung von flammgeschützten Formkörpern jeglicher Art und die hierbei erhältlichen Formkörper.

Thermoplastische Polyester werden seit langem als Werkstoffe eingesetzt. Neben ihren mechanischen, thermischen, elektrischen und chemischen Eigenschaften gewinnen zunehmend Eigenschaften wie Flammwidrigkeit und hoher Glühdrahtbeständigkeit an Bedeutung. Beispiele hier sind Anwendungen im Haushaltswarenbereich (z.B. Stecker) und im Elektronikbereich (z.B. Abdeckungen für Schutzschalter).

Darüber hinaus besteht ein zunehmendes Marktinteresse an halogenfrei flammgeschützten thermoplastischen Polyestern. Hier sind die wesentlichen Anforderungen an das Flammschutzmittel eine helle Eigenfarbe, eine ausreichende Temperaturstabilität während der Polymerverarbeitung, sowie eine flammhemmende Wirksamkeit in verstärktem und unverstärktem Polymer.

Die Wirksamkeit von halogenfreien Flammschutzadditivmischungen, bestehend aus Phosphinaten und stickstoffhaltigen Synergisten bzw. Umsetzungsprodukten von Melamin mit Phosphorsäure (Melaminpolyphosphat) wird im Wesentlichen durch Brandprüfungen nach UL94-V beschrieben, s. EPA 142 3260, EP-A 1084181.

In DE-A-199 60 671 sind neben üblichen Flammschutzmitteln, wie Phosphinsäuresalzen und Melaminverbindungen, auch Kombinationen mit Metalloxiden, Metallhydroxiden oder anderen Salzen beschrieben.

Das besondere Problem dieser Formulierungen ist ein sprödes mechanisches Verhalten, was im Anwendungsfall häufig verfrüht zu Bruch führt (Bruchdehnung). Verschiedene Ansätze auf Basis von Polymermischungen wurden bereits beschrieben: Der Einsatz von handelsüblichen Schlagzähmodifikatoren (kommerzielle Produkte sind unter den Namen Lotader®, Paraloid®, Metablen® erhältlich) führt zu einer deutlichen Verbesserung der Mechanik, jedoch sind flammgeschützte Produkte mit dünnen Wandstärken nicht mehr zu realisieren. Der Grund ist die hohe Brennbarkeit dieser Additive, die größtenteils auf Ethylen oder Butadien basieren. Zähe flammgeschützte Produkte werden daher häufig durch Mischungen von PBT mit verschiedenen Elastomeren erreicht (US2008/0167406 und EP-A- 2476730), wobei hier die gleichen Nachteile auftreten.

In der WO2006/018127 sind Polyestermischungen beschrieben, die sowohl Fließverbesserer als auch Kautschuke als Schlagzähmodifizierer enthalten. Die Mechanik lässt sich in diesen Mischungen verbessern, allerdings verschlechtert sich durch den Zusatz der Kautschuke das Fließverhalten wieder.

Die kommerziell in ABS und PC verbreiteten Flammschutzadditive Resorcinol Bisdiphenyl Phosphat (RDP, CAS: 57583-54-7) und Bisphenol-A Diphenyl Phosphat (BDP, CAS: 5945-33-5) zeigen Nachteile bei der Migration (siehe Polymer Degradation and Stability, 2002, 77(2), p 267-272).

EP2 476 730 A1 beschreibt flammhemmende thermoplastische Zusammensetzungen aus den Komponenten A, C, D, E und F.

Aufgabe der vorliegenden Erfindung war es daher, halogenfreie flammgeschützte Polyesterformmassen zur Verfügung zu stellen, welche eine gute Mechanik (Bruchdehnung) und Flammschutzeigenschaften aufweisen. Die Verarbeitung sollte weiterhin verbessert werden, ebenso das Migrationsverhalten der Additive bei der Verarbeitung und den gewünschten Anwendungen (insbesondere für dünnwandige Teile).

Demgemäß wurden die eingangs definierten Formmassen gefunden. Bevorzugte Ausführungsformen sind den Unteransprüchen zu entnehmen.

Als Komponente (A) enthalten die erfindungsgemäßen Formmassen 10 bis 99, bevorzugt 20 bis 92 und insbesondere 35 bis 80 Gew.-% mindestens eines thermoplastischen Polyesters, verschieden von B) oder C).

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im Allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25° C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im Allgemeinen:
1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 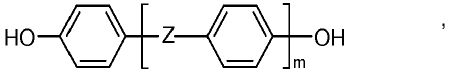 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seinen beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel 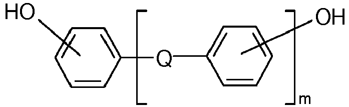 worin Q eine Einfachbindung, eine C₁- bis C₈-Alkylen-, eine C₂- bis C₃-Alkyliden-, eine C₃- bis C₆-Cycloalkylidengruppe, eine C₆- bis C₁₂-Arylengruppe sowie -O-, -S- oder -SO₂- bedeutet und m eine ganze Zahl von 0 bis 2 ist.

Die Diphenole können an den Phenylenresten auch Substituenten haben wie C₁- bis C₆-Alkyl oder C₁- bis C₆-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten nᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT® der Firma Bayer erhältlich.

Als Komponente B) enthalten die erfindungsgemäßen Formmassen 0,1 bis 30, vorzugsweise 0,5 bis 15, insbesondere 1 bis 10 und ganz besonders bevorzugt 1 bis 5 Gew.-% eines Poly ε-Caprolactons.

Derartige Polyester zeigen folgende Struktur:

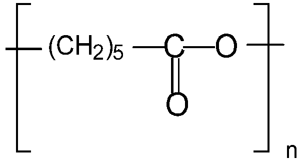

Die Herstellung erfolgt üblicherweise durch Ringöffnungspolymerisation von ε-Caprolacton.

Derartige Polymere sind semikristallin und gehören zu den biologisch abbaubaren Polyestern.

Gemäß Römpp Online Lexikon versteht man hierunter Polymere, die in Gegenwart von Mikroorganismen in biologisch aktiver Umgebung (Kompost etc.) abgebaut werden. (Im Unterschied zu oxo-abbaubaren oder UV initiiertem Abbau von Polyestern.)

Bevorzugte Komponenten B) weisen ein mittleres Molekulargewicht M_{w} von 5 000 bis 20 0000 g/mol, insbesondere von 50 000 bis 140 000 g/mol (bestimmt mittels GPC mit Hexafluoroisopropanol und 0,05% Kaliumtrifluoressigsäure als Lösungsmittel, als Standard wurde PMMA verwendet).

Der Schmelzbereich (DSC, 20K/min nach DIN 11357) liegt im Allgemeinen von 80 bis 150, bevorzugt von 100 bis 130 °C.

Im Handel sind derartige Produkte beispielsweise unter der Marke Capa® der Firma Perstorp erhältlich.

Als Komponente C) enthalten die erfindungsgemäßen Formmassen 0,1-30, vorzugsweise 0,5 bis 15,insbesondere 1 bis 10 und ganz besonders bevorzugt 1 bis 5 Gew.-% eines biologisch abbaubaren Polyesters, verschieden von B) und A).

Hierunter sollen vorzugsweise aliphatisch-aromatische Polyester verstanden werden.

Unter aliphatisch-aromatischen Polyestern C) sind lineare, kettenverlängerte und vorzugsweise verzweigte und kettenverlängerte Polyester zu verstehen, wie beispielsweise in der WO 96/15173 bis 15176 oder in der WO 98/12242, auf die ausdrücklich Bezug genommen wird, beschrieben. Mischungen unterschiedlicher teilaromatischer Polyester kommen ebenso in Betracht. Interessante jüngere Entwicklungen basieren auf nachwachsenden Rohstoffen (siehe WO2010/034689). Insbesondere sind unter Polyestern C) Produkte wie ecoflex® (BASF SE) zu verstehen.

Zu den bevorzugten Polyestern C) zählen Polyester, die als wesentliche Komponenten enthalten:
C1) 30 bis 70 mol-%, vorzugsweise 40 bis 60 und insbesondere bevorzugt 50 bis 60 mol-%, bezogen auf die Komponenten C1) bis C2), einer aliphatischen Dicarbonsäure oder Mischungen davon, vorzugsweise wie im Folgenden ausgeführt: Adipinsäure, Azelainsäure, Sebacinsäure und Brassylsäure,
C2) 30 bis 70 mol-%, vorzugsweise 40 bis 60 und insbesondere bevorzugt 40 bis 50 mol-%, bezogen auf die Komponenten C1) und C2), einer aromatischen Dicarbonsäure oder Mischungen davon, vorzugsweise wie im Folgenden ausgeführt: Terephthalsäure,
C3) 98,5 bis 100 mol-%, bezogen auf die Komponenten C1) bis C2), 1,4-Butandiol und 1,3-Propandiol; und
C4) 0,05 bis 1,5 Gew.-%, vorzugsweise 0,1 bis 0,2 Gew.-%, bezogen auf die Komponenten C1) bis C3), eines Kettenverlängerers, insbesondere eines di- oder polyfunktionellen Isocyanats, vorzugsweise Hexamethylendiisocyanats und gegebenenfalls eines Verzweigers vorzugsweise: Trimethylolpropan, Pentaerythrit und insbesondere Glycerin.

Als aliphatische Disäuren und die entsprechenden Derivate C1) kommen im Allgemeinen solche mit 6 bis 20 Kohlenstoffatomen, vorzugsweise 6 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: 2-Methylglutarsäure, 3-Methylglutarsäure, α-Ketoglutarsäure, Adipinsäure, Pimelinsäure, Azelainsäure, Sebacinsäure, Brassylsäure, Suberinsäure (Korksäure), und Itaconsäure. Dabei können die Dicarbonsäuren oder deren esterbildenden Derivate, einzeln oder als Gemisch aus zwei oder mehr davon eingesetzt werden.

Bevorzugt werden Adipinsäure, Azelainsäure, Sebacinsäure, Brassylsäure oder deren jeweilige esterbildenden Derivate oder Mischungen davon eingesetzt. Besonders bevorzugt werden Adipinsäure oder Sebacinsäure oder deren jeweilige esterbildenden Derivate oder Mischungen davon eingesetzt.

Insbesondere bevorzugt sind die folgenden aliphatisch-aromatischen Polyester: Polybutylenadipatterephthalat (PBAT), Polybutylensebacatterephthalat (PBSeT).

Die aromatischen Dicarbonsäuren oder deren esterbildende Derivate C2 können einzeln oder als Gemisch aus zwei oder mehr davon eingesetzt werden. Besonders bevorzugt wird Terephthalsäure oder deren esterbildende Derivate wie Dimethylterephthalat, verwendet.

Die Diole C3 - 1,4-Butandiol und 1,3- Propandiol - sind als nachwachsender Rohstoff zugänglich. Es können auch Mischungen der genannten Diole verwendet werden.

In der Regel werden 0,05 bis 1,5 Gew-%, vorzugsweise 0,1 bis 1,0 Gew.-% und insbesondere bevorzugt 0,1 bis 0,3 Gew.-%, bezogen auf das Gesamtgewicht des Polyesters, eines Verzweigers und/oder 0,05 bis 1 Gew-%, vorzugsweise 0,1 bis 1,0 Gew.- %, bezogen auf das Gesamtgewicht des Polyesters, eines Kettenverlängerers C4) eingesetzt, ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt. Als Kettenverlängerer C4) kommen polyfunktionelle und insbesondere difunktionelle Isocyanate, Isocyanurate, Oxazoline oder Epoxide in Frage.

Kettenverlängerer sowie Alkohole oder Carbonsäurederivate mit mindestens drei funktionellen Gruppen können auch als Verzweiger aufgefasst werden. Besonders bevorzugte Verbindungen haben drei bis sechs funktionellen Gruppen. Beispielhaft seien genannt: Weinsäure, Zitronensäure, Äpfelsäure, Trimesinsäure, Trimellitsäure, Trimellitsäureanhydrid, Pyromellitsäure und Pyromellitsäuredianhydrid; Trimethylolpropan, Trimethylolethan; Pentaerythrit, Polyethertriole und Glycerin. Bevorzugt sind Polyole wie Trimethylolpropan, Pentaerythrit und insbesondere Glycerin. Mittels der Komponenten C4) lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten.

In der Regel ist es sinnvoll die verzweigenden (mindestens trifunktionellen) Verbindungen zu einem früheren Zeitpunkt der Polymerisation zuzugeben.

Als bifunktionelle Kettenverlängerer eignen sich beispielsweise Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat,1,6-Hexamethylendiisocyanat, Isophorondiisocyanat oder Methylen-bis(4-isocyanatocyclo-hexan) verstanden. Besonders bevorzugte sind Isophorondiisocyanat und insbesondere 1,6-Hexamethylendiisocyanat.

Die Polyester C) weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl beträgt vorzugsweise von 50 bis 450, vorzugsweise von 80 bis 250 g/ml (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Der MVR (Schmelzvolumenrate) nach EN ISO 1133-1 DE (190°C, 2,16 kg Gewicht) liegt im Allgemeinen bei 0,5 bis 8, bevorzugt bei 0,8 bis 6 cm³/10 min. Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Als Komponente D) enthalten die erfindungsgemäßen Formmassen 0,1 bis 30, vorzugsweise 5 bis 25 und insbesondere 10 bis 25 Gew.-%, bezogen auf A) bis C) eines Phosphinsäuresalzes.

Bevorzugt sind Phosphinsäuresalze der Formel (I) oder/und Diphosphinsäuresalze der Formel (II) oder deren Polymeren: 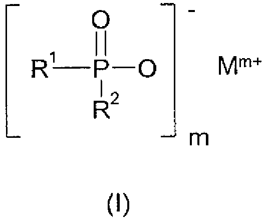 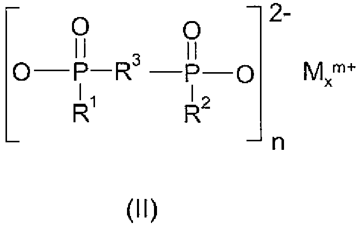 worin
- R¹, R²: gleich oder verschieden sind und Wasserstoff, linear oder verzweigt C₁-C₆-Alkyl, und/oder Aryl oder 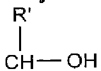
- R': Wasserstoff, Phenyl, Tolyl
- R³: linear oder verzweigt C₁-C₁₀-Alkylen, C₆-C₁₀-Aryten, -Alkylarylen oder-Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4; n 1 bis 4; x 1 bis 4 bedeuten.

Bevorzugt sind R¹, R² der Komponente B gleich oder verschieden und bedeuten Wasserstoff, Methyl, Ethyl, n-Propyl, Iso-Propyl, n-Butyl, tert.-Butyl, n-Pentyl und/oder Phenyl.

Bevorzugt bedeutet R³ der Komponente B Methylen, Ethylen, n-Propylen, Iso-Propylen, n-Butylen, tert.-Butylen, n-Pentylen, n-Octylen oder n-Dodecylen, Phenylen oder Naphthylen; Methyl-phenylen, Ethyl-phenylen, tert-Butylphenylen, Methyl-naphthylen, Ethyl-naphthylen oder tert.-Butylnaphthylen; Phenyl-methylen, Phenyl-ethylen, Phenyl-propylen oder Phenyl-butylen.

Besonders bevorzugt ist R¹, R² Wasserstoff, Methyl, Ethyl und M = Mg, Ca, Zn, Al, wobei Alhypophosphit, Diethyl-AI-phosphinat besonders bevorzugt sind.

Die Herstellung der Phosphinate erfolgt vorzugsweise durch Ausfällen der entsprechenden Metallsalze aus wässrigen Lösungen. Die Phosphinate können jedoch auch in Gegenwart eines geeigneten anorganischen Metalloxids oder -sulfids als Trägermaterials (Weißpigmente, wie z.B. TiO₂, SnO₂, ZnO, ZnS, SiO₂) gefällt werden. Man erhält somit oberflächenmodifizierte Pigmente, die als lasermarkierbare Flammschutzmittel für thermoplastische Polyester verwendet werden können.

Als Komponente E) können die erfindungsgemäßen Formmassen 0 bis 20, vorzugsweise 1 bis 20 und insbesondere 1 bis 15 Gew.-% eines stickstoffhaltigen Flammschutzmittels, vorzugsweise einer Melaminverbindung enthalten.

Das gemäß der Erfindung (Komponente E) bevorzugt geeignete Melamincyanurat ist ein Reaktionsprodukt aus vorzugsweise äquimolaren Mengen von Melamin (Formel I) und Cyanursäure bzw. Isocyanursäure (Formeln Ia und Ib)

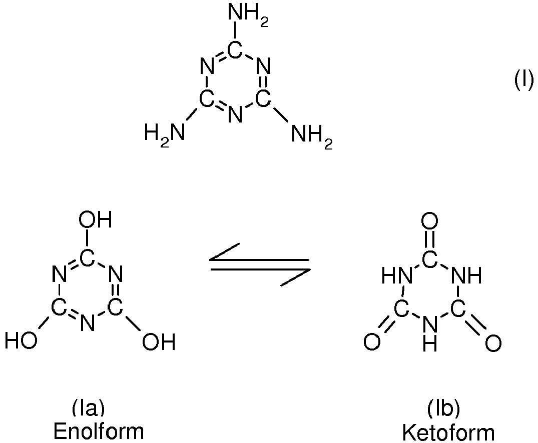

Man erhält es z.B. durch Umsetzung von wässrigen Lösungen der Ausgangsverbindungen bei 90 bis 100°C. Das im Handel erhältliche Produkt ist ein weißes Pulver mit einer mittleren Korngröße d₅₀ von 1,5 - 7 µm und einem d₉₉ Wert kleiner 50µm.

Weitere geeignete Verbindungen (oft auch als Salze oder Addukte bezeichnet) sind Melaminsulfat, Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2 bzw. 218768-84-4).

Bevorzugt sind Melaminpolyphosphatsalze einer 1,3,5-Triazinverbindung, deren Zahl n des durchschnittlichen Kondensationsgrades zwischen 20 und 200 liegt und der 1,3,5-Triazingehalt 1,1 bis 2,0 mol einer 1,3,5-Triazinverbindung, ausgewählt aus der Gruppe, bestehend aus Melamin, Melam, Melem, Melon, Ammelin, Ammelid, 2-Ureidomelamin, Acetoguanamin, Benzoguanamin und Diaminphenyltriazin, pro Mol Phosphoratom beträgt. Bevorzugt beträgt der n-Wert solcher Salze im Allgemeinen zwischen 40 und 150 und das Verhältnis einer 1,3,5-Triazinverbindung pro Mol Phosphoratom vorzugsweise zwischen 1,2 und 1,8. Desweiteren wird der pH einer 10 gew.-%igen wässrigen Aufschlämmung von Salzen, hergestellt gemäß EP-B1095030 im Allgemeinen mehr als 4,5 und vorzugsweise mindestens 5,0, betragen. Der pH-Wert wird üblicherweise bestimmt, indem 25 g des Salzes und 225 g sauberes Wasser von 25°C in einen 300-ml-Becher gegeben werden, die resultierende wäßrige Aufschlammung für 30 Minuten gerührt und dann der pH gemessen wird. Der o.g. n-Wert, der zahlenmittlere Kondensationsgrad, kann mittels 31P-Feststoff-NMR bestimmt werden. Aus J. R. van Wazer, C. F. Callis, J. Shoolery und R. Jones, J. Am. Chem. Soc., 78, 5715, 1956, ist bekannt, dass die Anzahl benachbarter Phosphatgruppen eine einzigartige, chemische Verschiebung angibt, die die klare Unterscheidung zwischen Orthophosphaten, Pyrophosphaten und Polyphosphaten ermöglicht. In EP1095030B1 ist außerdem ein Verfahren zur Herstellung des gewünschten Polyphosphatsalzes einer 1,3,5-Triazinverbindung, die einen n-Wert von 20 bis 200 aufweist und deren 1,3,5- Triazingehalt 1,1 bis 2,0 mol einer 1,3,5- Triazinverbindung betragt, beschrieben. Dieses Verfahren umfaßt die Umwandlung einer 1,3,5-Triazinverbindung mit Orthophosphorsaure in ihr Orthophosphatsalz, gefolgt von Dehydratisierung und Warmebehandlung, um das Orthophosphatsalz in ein Polyphosphat der 1,3,5-Triazinverbindung umzuwandeln. Diese Wärmebehandlung wird vorzugsweise bei einer Temperatur von mindestens 300°C, und vorzugsweise bei mindestens 310°C, durchgeführt. Zusätzlich zu Orthophosphaten von 1,3,5-Triazinverbindungen können ebenso andere 1,3,5-Triazinphosphate verwendet werden, einschließlich beispielsweise ein Gemisch aus Orthophosphaten und Pyrophosphaten.

Geeignete Guanidinsalze sind

| | CAS-Nr. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden.

Weiterhin geeignet sind Ammoniumpolyphosphat (NH₄PO₃)ₙ mit n ca. 200 bis 1000 bevorzugt 600 bis 800, und Tris(hydroxyethyl)isocyanurat (THEIC) der Formel IV 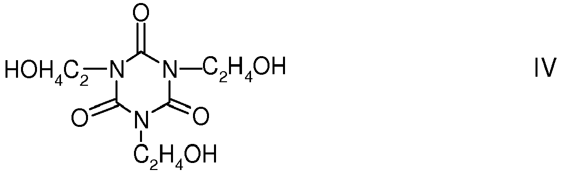 oder dessen Umsetzungsprodukte mit aromatischen Carbonsäuren Ar(COOH)ₘ, welche gegebenenfalls in Mischung miteinander vorliegen können, wobei Ar ein ein-, zwei- oder dreikerniges aromatisches Sechsringsystem bedeutet und m 2, 3 oder 4 ist.

Geeignete Carbonsäuren sind beispielsweise Phthalsäure, Isophthalsäure, Terephthalsäure, 1,3,5-Benzoltricarbonsäure, 1,2,4-Benzoltricarbonsäure, Pyromellithsäure, Mellophansäure, Prehnitsäure, 1-Naphthoesäure, 2-Naphthoesäure, Naphthalindicarbonsäuren und Anthracencarbonsäuren.

Die Herstellung erfolgt durch Umsetzung des Tris(hydroxyethyl)isocyanurats mit den Säuren, ihren Alkylestern oder ihren Halogeniden gemäß den Verfahren der
EP-A 584 567.

Derartige Umsetzungsprodukte stellen ein Gemisch von monomeren und oligomeren Estern dar, welche auch vernetzt sein können. Der Oligomerisierungsgrad beträgt üblicherweise 2 bis ca. 100, vorzugsweise 2 bis 20. Bevorzugt werden Mischungen von THEIC und/oder dessen Umsetzungsprodukte mit phosphorhaltigen Stickstoffverbindungen, insbesondere (NH₄PO₃)ₙ oder Melaminpyrophosphat oder polymeres Melaminphosphat eingesetzt. Das Mischungsverhältnis z.B. von (NH₄PO₃)ₙ zu THEIC beträgt vorzugsweise 90 bis 50 zu 10 bis 50, insbesondere 80 bis 50 zu 50 bis 20 Gew.-%, bezogen auf die Mischung derartiger Komponenten B1).

Weiterhin geeignet sind Benzoguanamin-Verbindungen der Formel V 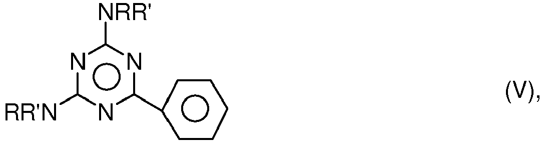 in der R, R' geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.

Bevorzugt sind ferner Allantoin-Verbindungen der Formel VI 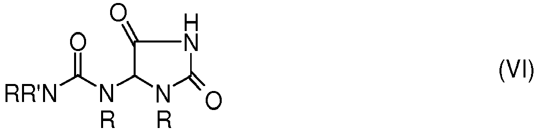 wobei R, R' die in Formel V angegebene Bedeutung haben sowie deren Salze mit Phosphorsäure, Borsäure und/oder Pyrophosphorsäure sowie Glycolurile der Formel VII oder dessen Salze mit den o.g. Säuren 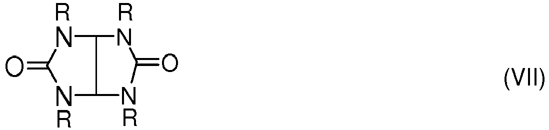 in der R die in Formel V genannte Bedeutung hat.

Geeignete Produkte sind im Handel oder gemäß DE-A 196 14 424 erhältlich.

Das gemäß der Erfindung verwendbare Cyanguanidin (Formel VIII) erhält man z.B. durch Umsetzung von Kalkstickstoff (Calciumcyanamid) mit Kohlensäure, wobei das entstehende Cyanamid bei pH 9 bis 10 zu Cyanguanidin dimerisiert.

CaNCN + H₂O CO₂ → H₂N-CN + CaCO₃

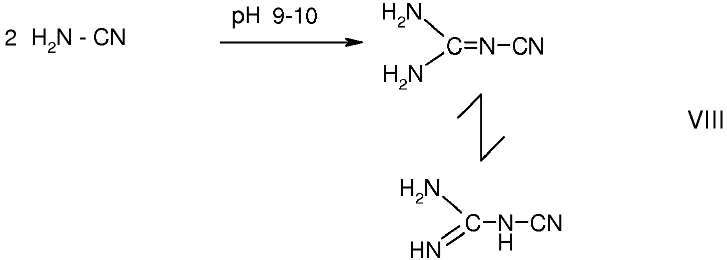

Das im Handel erhältliche Produkt ist ein weißes Pulver mit einem Schmelzpunkt von 209°C bis 211°C.

Bevorzugt beträgt das Verhältnis der Komponenten B) zu C) 1 : 1 bis 5 : 1, insbesondere 1:1.5 bis 1:2.5.

Ganz besonders bevorzugt wird erfindungsgemäß Melamincyanurat eingesetzt, dessen Teilchengrößenverteilung beträgt:
d₉₈ < 25 µm, bevorzugt < 20 µm
d₅₀ < 4,5 µm, bevorzugt < 3 µm.

Unter einem d₅₀-Wert versteht der Fachmann in der Regel den Teilchengrößenwert, bei welchem 50 % der Teilchen eine kleinere Teilchengröße aufweisen und 50 % eine größere Teilchengröße aufweisen.

Die Teilchengrößenverteilung wird üblicherweise durch Laserbeugung bestimmt (analog ISO 13320).

Als Komponente F) können die erfindungsgemäßen Formmassen 0 bis 15, vorzugsweise 0,1 bis 15, insbesondere 0,5 bis 10 Gew.-% eines aromatischen Phosphatesters mit mindestens einem alkylsubstituierten Phenylring enthalten.

Bevorzugte P-Ester weisen einen Schmelzpunkt, gemessen mittels DSC gemäß ISO 11357, 1. Aufheizkurve mit 20 K/Minute, von 50 bis 150 bevorzugt von 60 bis 110 °C, auf.

Bevorzugte Komponenten F) sind aufgebaut aus: 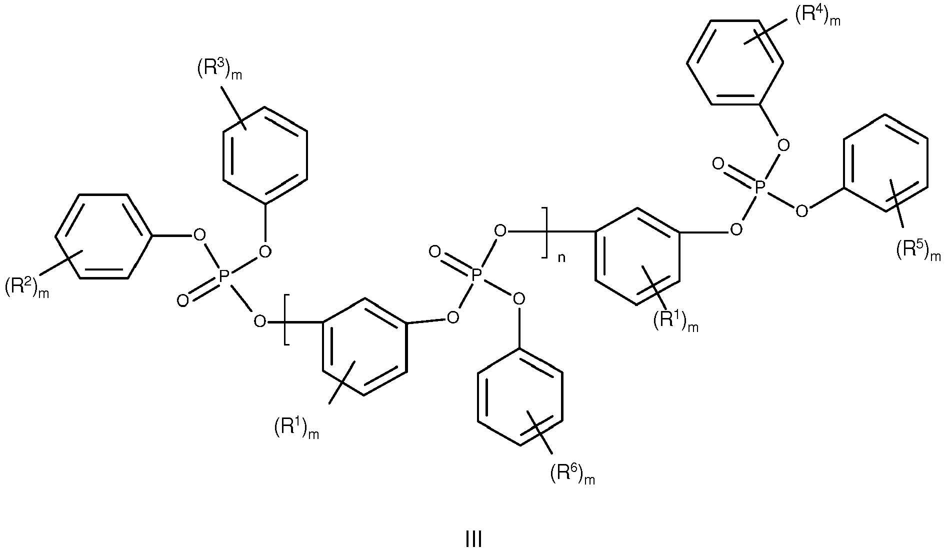 oder 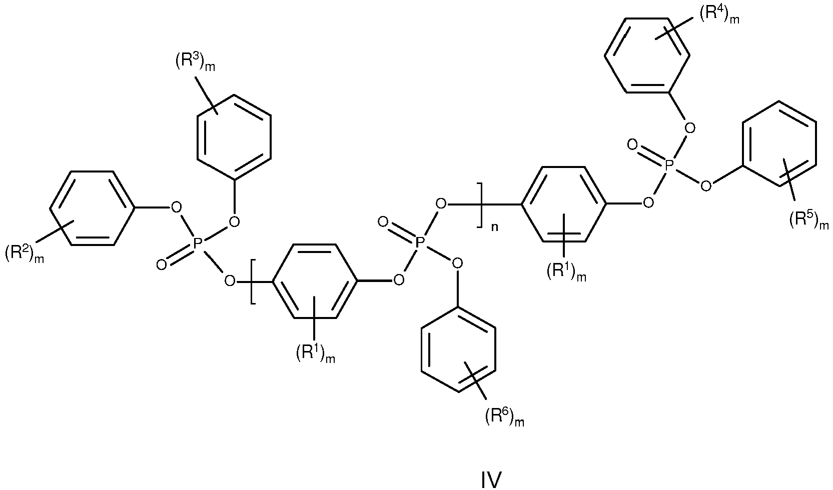 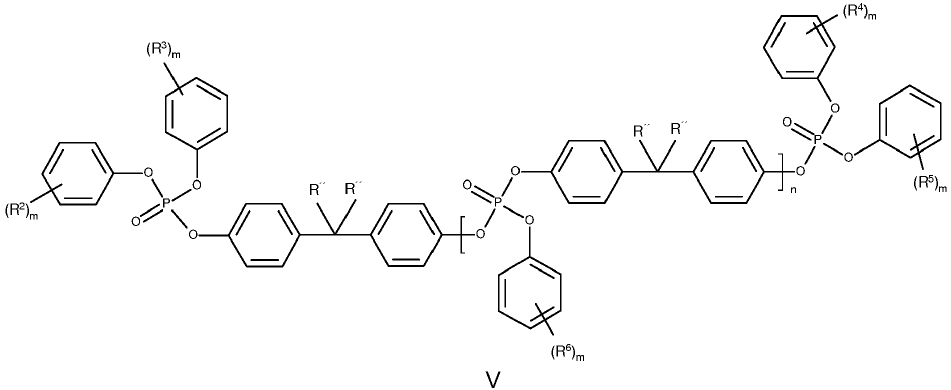 oder deren Mischungen,
wobei unabhängig voneinander
R¹ = H, Methyl oder Isopropyl, bevorzugt H,
n = 0 bis 7, bevorzugt 0,
R²⁻⁶ = H, Methyl, Ethyl oder Isopropyl, vorzugsweise Methyl,
m = 1 bis 5, bevorzugt 1 bis 2,
R" = H, Methyl, Ethyl oder Cyclopropyl, vorzugsweise Methyl oder Wasserstoff bedeutet, mit der Maßgabe, dass mindestens ein Rest R² bis R⁶ ein Alkylrest ist.

Bevorzugt sind die Reste R⁶ und R⁴ identisch, insbesondere sind die Reste R² bis R⁶ identisch.

Bevorzugte Komponente F) ist:

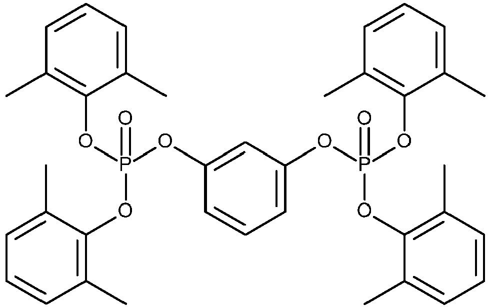

Derartige Verbindungen sind als PX-200®, CAS Nr. 139189-30-3, der Firma Daihachi im Handel erhältlich oder als Sol-DP® der Firma ICL-IP.

Als Komponente G) können die erfindungsgemäßen Formmassen 0 bis 50, insbesondere bis zu 40 Gew.-% weiterer Zusatzstoffe und Verarbeitungshilfsmittel enthalten.

Übliche Zusatzstoffe E) sind beispielsweise in Mengen bis zu 40, vorzugsweise bis zu 15 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomere vorgestellt.

Bevorzugte Arten von Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Mono-merengemisch in den Kautschuk eingebaut

R¹C(COOR²)=C(COOR³)R⁴ (I)

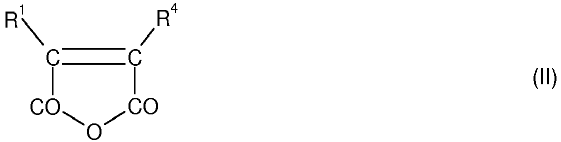

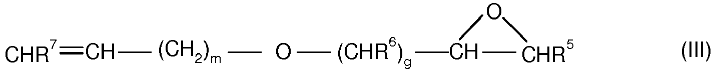

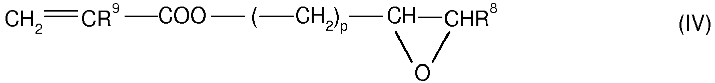

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0, 1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 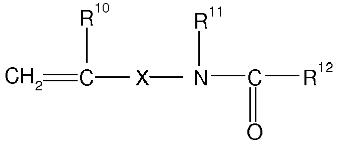 eingeführt werden können,
wobei die Substituenten folgende Bedeutung haben können:
R¹⁰ Wasserstoff oder eine C₁- bis C₄-Alkylgruppe,
R¹¹ Wasserstoff, eine C₁- bis C₈-Alkylgruppe oder eine Arylgruppe, insbesondere Phenyl,
R¹² Wasserstoff, eine C₁- bis C₁₀-Alkyl-, eine C₆- bis C₁₂-Arylgruppe oder -OR¹³
R¹³ eine C₁- bis C₈-Alkyl- oder C₆- bis C₁₂-Arylgruppe, die gegebenenfalls mit O- oder N-haltigen Gruppen substituiert sein können,
X eine chemische Bindung, eine C₁- bis C₁₀-Alkylen- oder C₆-C₁₂-Arylengruppe oder

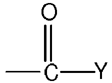

- Y: O-Z oder NH-Z und
- Z eine: C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethyl-acrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe G) seien Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt. Faserförmige Füllstoffe G) werden in Mengen bis zu 50 Gew.-%, insbesondere bis zu 35 Gew.-% eingesetzt, teilchenförmige Füllstoffe werden in Mengen bis zu 30 Gew%, insbesondere bis zu 10 Gew% eingesetzt.

Als bevorzugte faserförmige Füllstoffe seien Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Stark laserabsorbierende Füllstoffe wie beispielsweise Kohlenstofffasern, Russ, Graphit, Graphen oder Kohlenstoffnanoröhrchen werden bevorzugt in Mengen unter 1 Gew.-%, besonders bevorzugt unter 0,05 Gew.-% eingesetzt.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: X NH₂-, 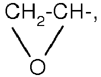 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1.

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,05 bis 5, vorzugsweise 0,1 bis 1,5 und insbesondere 0,2 bis 0,5 Gew.-% (bezogen auf G) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente G) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische und organische Pigmente sowie Farbstoffe, wie Nigrosin und Anthrachinone als Farbmittel zugesetzt werden. Besonders geeignete Farbmittel sind beispielsweise in EP 1722984 B1, EP 1353986 B1 oder DE 10054859 A1 genannt.

Weiterhin bevorzugt sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen die 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfon-amid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oder Tetrafluorethylen-Copolymerisate mit kleineren Anteilen (in der Regel bis zu 50 Gew.-%) copolymerisierbarer ethylenisch ungesättigter Mono-merer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt (z.B. Auftragen, oder Auftrommeln einzelner Komponenten auf das Granulat) werden und dann die restlichen Ausgangsstoffe einzeln und/oder ebenfalls gemischt hinzugegeben werden. Die Mischtemperaturen liegen in der Regel bei 230 bis 290°C.

Nach einer weiteren bevorzugten Arbeitsweise können die jeweiligen Komponenten mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen Formmassen zeichnen sich durch gute mechanische und Flammschutz-Eigenschaften aus. Die Migration ist verbessert und die Verarbeitung. Insbesondere Anwendungen mit dünnen Wänden zeigen guten Flammschutz und Mechanik.

Die aus den erfindungsgemäßen Formmassen hergestellten Formkörper werden zur Herstellung von Innen- und Außenteilen, vorzugsweise mit tragender oder mechanischer Funktion im Bereich Elektro, Möbel, Sport, Maschinenbau, Sanitär und Hygiene, Medizin, Energie- und Antriebstechnik, Automobil und andere Transportmittel oder Gehäusematerial für Geräte und Apparate für die Telekommunikation, Unterhaltungselektronik, Haushaltsapparate, Maschinenbau, Heizungsbereich oder Befestigungsteile für Installationen oder für Behälter und Lüftungsteile aller Art eingesetzt.

Diese eignen sich zur Herstellung von Fasern, Folien und Formkörper jeglicher Art, insbesondere für Anwendungen als Stecker, Schalter, Gehäuseteile, Gehäusedeckel, Scheinwerferhintergrund (Bezel), Brausekopf, Armaturen, Bügeleisen, Drehschalter, Herdknöpfe, Friteusendeckel, Türgriffe, (Rück)-spiegelgehäuse, (Heck)-scheibenwischer, Lichtwellenleiterummantelungen.

Im E/E-Bereich können mit den erfindungsgemäßen Polyestern, Stecker, Steckerteile, Steckverbinder, Kabelbaumkomponenten, Schaltungsträger, Schaltungsträgerkomponenten, dreidimensional spritzgegossene Schaltungsträger, elektrische Verbindungselemente, mechatronische Komponenten oder optoelektronische Bauelemente hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Frontscheinwerferkomponenten, Außenspiegelkomponenten, Scheibenwischerkomponenten, Scheibenwischerschutzgehäuse, Ziergitter, Dachreling, Schiebedachrahmen sowie Karosserieaußenteile möglich.

Für den Küchen- und Haushaltsbereich ist der Einsatz der Polyester zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte möglich.

### Beispiele

### Komponente A:

Polybutylenterephthalat mit einer Viskositätszahl VZ von 130 ml/g und einem Carboxylendgruppengehalt von 34 mval/kg (Ultradur® B 4520 der BASF SE) (VZ gemessen in 0,5 gew.-%iger Lösung aus Phenol/o-Dichlorbenzol), 1:1-Mischung bei 25 °C gemäß DIN 53728 bzw. ISO 1628, enthaltend 0,65 Gew.-%, bezogen auf A, Pentaerythrittetrastearat als Schmiermittel (G1).

### Komponente B:

Poly (ε)-Caprolacton (Capa® 6500 der Firma Perstorp): M_{w} (GPC, Hexafluoroisopropanol / 0,05% Kaliumtrifluoressigsäure, PMMA Standard): 99 300 g/mol mit einer Viskositätszahl VZ von 226 ml/g (VZ gemessen in 0,5 gew.-%iger Lösung aus Phenol/o-Dichlorbenzol), 1:1-Mischung bei 25 °C gemäß DIN 53728 bzw. ISO 1628. Schmelzbereich (DSC, 20K/min nach DIN 11357): 58-60 °C.

### Komponente C:

Co-Polyester: Polybutylensebacat-coterephthalat, Schmelzpunkt (DSC, 20K/min nach DIN 11357): 110-120 °C, M_{w} (GPC, Hexafluoroisopropanol / 0,05% Kaliumtrifluoressigsäure, PMMA Standard): 94 600 g/mol.

### Komponente D/1:

Al-Diethylphosphinat (Exolit® OP 1240 der Clariant GmbH): Partikelgröße d (0.9) = 80.194 µm bestimmt mit einem Mastersizer 2000 (Messbereich von 0.02 - 20000 µm) in Wasser.

### Komponente D/2:

Al-Diethylphosphinat (Exolit® OP 935 der Clariant GmbH): Partikelgröße d (0.9) = 5.613 µm bestimmt mit einem Mastersizer 2000 (Messbereich von 0.02 - 20000 µm) in Wasser.

### Komponente F:

PX-200 der Firma Daihachi Chem.: Schmelzpunkt (DSC, 20K/min nach DIN 11357) : 95° C

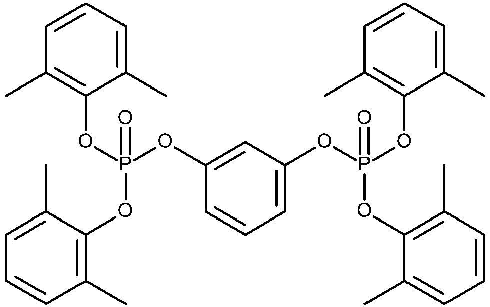

### Komponente G/2:

PTFE Dyneon TF2071 der Firma 3M (Dyneon). Die Partikelgröße gemäß TDS beträgt 500 µm (ISO 12086) und die Dichte 2,16 g/cm³ (ISO 12086).

### Herstellung der Formmassen

Die einzelnen Komponenten wurden für die Zusammensetzungen gemäß Tabelle 1 zunächst als Konzentrate (Batch) von D (42,5 Gew.-%) in A) und F (38 Gew.-%) in A) compoundiert.

Die Masterbatche und die jeweiligen weiteren Komponenten wurden über separate Dosierwagen in die unten beschriebene Spritzgussmaschine dosiert und direkt zu den entsprechenden Spritzgussprüfkörpern verarbeitet. Der Durchsatz bei allen Versuchen lag bei 10 kg/h. Die Düse wurde bei 250 °C und der Einzug bei 20 °C betrieben. Ausgehend von der Aufschmelzzone mit einer Temperatur von 230 °C bis zu einer Temperatur am Mischkopf von 255 °C wurde die Temperatur zonenweise in 5 bis 10 °C Schritten erhöht.

Die Formmassen für die erfindungsgemäßen Beispiele in Tabelle 2 wurden mittels eines Zweiwellenextruders ZE25 hergestellt. Das Temperaturprofil wurde von 240 °C in Zone 1 auf 260 °C (Zone 2-9) erhöht und konstant gehalten. Eine Drehzahl von 130 U/min wurde eingestellt, was einen Durchsatz von ca. 7,5 - 9,6 kg/h, je nach Formulierung, zur Folge hatte. Das Extrudat wurde durch ein Wasserbad gezogen und granuliert. Das Granulat wurde im Anschluss mittels Spritzguss verarbeitet.

### Messungen der Eigenschaften:

Die Flammschutzprüfung wurde gemäß UL 94 an 1,6 mm dicken Teststäbchen für Tabelle 1 und 0,8/0,4 mm dicken Stäben für Tabelle 2 bestimmt.

DSC Messung wurde mit dem Instrument DSC Q2000 der Firma TA Instruments durchgeführt. Die Einwaage betrug ca. 8,5 mg. Die ungetrocknete Probe wurde von -20 °C mit einer Heizrate von 20 °C/min auf 200 °C erhitzt und der Schmelzpunkt als Temperaturmaximum des durch den Schmelzvorgang verursachten Peaks während des Aufheizens bestimmt (DIN 11357).

Die Molmassenverteilung der Polymere wurde nach der Methode der Größen-Ausschlusschromatographie (=SEC bzw. GPC) bestimmt. Die Kalibrierung erfolgte mit eng verteilten PMMA-Standards der Fa. PSS mit Molekulargewichten von M = 800 g/mol bis M = 1.820.000 g/mol. Werte außerhalb dieses Elutionsbereiches traten nicht in erheblichem Umfang auf. Die Messungen erfolgten maßgeblich gemäß DIN 55672-2:2008-06.

| | |
|---|---|
| Elutionsmittel: | Hexafluorisopropanol + 0,05% Trifluoressigsäure-Kaliumsalz |
| Säulen-Temperatur: | 35 °C |
| Durchflußgeschw: | 1 ml/min |
| Injektion: | 50 µL |
| Konzentration: | 1,5 mg/ml |

Probelösungen wurden über Millipore Millex FG (0,2 µm) filtriert.

| | |
|---|---|
| Detektor: | DRI Agilent 1100 |
| Trennmaterial: | Styrol-Divinylbenzol |
| Säulenlänge | 30 cm |
| Innendurchmesser: | 7,5 mm |

Alle Mechanik-Daten in Tabelle 1 wurden folgendermaßen bestimmt: Zug-Dehnungs-Messungen an 5 Normprüfkörpern (Typ 1A nach ISO 294-1) pro Formulierung wurden mit einer Zugprüfmaschine T1-FR010TH.A50 von Zwick/Roell nach ISO 527-1 durchgeführt (max. Prüfkraft: 10 kN, Vorkraft: 0,3 MPa). Charpy-Schlagzähigkeit und Kerbschlagzähigkeit-Messungen wurden ebenfalls an 5 Prüfkörpern (Typ B nach ISO 294-1) pro Formulierung mit einem Schlagpendel HIT5.5P von Zwick/Roel bzw. nach vorheriger Präparierung mit einer Kerbfräse ZNO von Zwick/Roell nach ISO 179-1 durchgeführt (Nennarbeitsvermögen: 5 J, Auftreffgeschwindigkeit: 2,9 m/s).

Alle Mechanik-Daten in Tabelle 2 wurden nach den gleichen Standards bestimmt. Als Maschinen kamen jedoch ein Schlagpendel der Firma Instron Wolpert und eine Zugversuchsmaschine der Firma Zwick (Z020) zum Einsatz. Die nominelle Bruchdehnung wurde nach ISO 527-1, Gleichung 11 an einem Stab Typ 1A bestimmt.

Die Zusammensetzungen und die Messergebnisse sind den Tabellen zu entnehmen.

**Tabelle 1**

| Komponenten in [Gew.-%] | | | | | | | | | | | |
|---|---|---|---|---|---|---|---|---|---|---|---|
| | Ref | E1 | E2 | E3 | E4 | V1 | V2 | V3 | V4 | V5 | V6 |
| A + G/1 | 100 | 67,0 | 69,0 | 66,0 | 73,0 | 70,0 | 76,0 | 76,0 | 70,0 | 70,0 | 72,0 |
| B | | 3,0 | 3,0 | 6,0 | 3,0 | 10,0 | 4,0 | | | | 4,0 |
| C | | 4,0 | 2,0 | 2,0 | 4,0 | | | 4,0 | 10,0 | 4,0 | |
| F | | 6,0 | 6,0 | 6,0 | | | | | | 6,0 | 4,0 |
| D/1 | | 20,0 | 20,0 | 20,0 | 20,0 | 20,0 | 20,0 | 20,0 | 20,0 | 20,0 | 20,0 |
| Streckdehnung [%] | 3,4 | 3,86 | 3,05 | 3,29 | 2,51 | 2,15 | 2,09 | 2,17 | 2,8 | 2,93 | 2,4 |
| Bruchdehnung [%] | 46,5 | 40,5 | 35,9 | 26,5 | 21,6 | 12,5 | 10,5 | 9,3 | 14,4 | 15,1 | 21,1 |
| Schlagzähigkeit [kJ/m2] | 124,6 | 27,8 | 25,1 | 25,9 | 26,3 | 24,5 | 25,1 | 22,7 | 25,7 | 21,5 | 25 |
| UL94-V-Einstuf., 1.6 mm | N.C. | V0 | V0 | V0 | V0 | V0 | V0 | V0 | V2 | V0 | V0 |

**Tabelle 2**

| Komponenten [Gew.-%] | E1 | E2 | E3 | E4 | V1 |
|---|---|---|---|---|---|
| A + G/1 | 73,5 | 70 | 70,5 | 72 | 79,5 |
| B | 2,5 | 2,5 | 4 | 4 | 0 |
| C | 2,5 | 4,0 | 4 | 4 | 0 |
| D/2 | 18,0 | 20,0 | 18 | 18 | 20,0 |
| F | 3,0 | 3,0 | 3 | 1,5 | 0 |
| G/2 | 0,5 | 0,5 | 0,5 | 0,5 | 0,5 |
| Streckdehnung [%] | 3,1 | 3,0 | 3,7 | 4 | 2,4 |
| Bruchdehnung [%] | | | | | |
| Nom. Bruchdehnung [%] | 22,2 | 17,4 | 27,4 | 20,4 | 4,0 |
| Schlagzähigkeit [kJ/m2] | 74,5 | 77,6 | 114 | 70 | 22,5 |
| UL94-V-Einstuf., 0,4 mm | V-0 | V-0 | V-0 | V-0 | V-2 |
| UL94-V-Einstuf., 0,8 mm | V-0 | V-0 | V-0 | V-0 | V-2 |

## Patentansprüche

1. Thermoplastische Formmassen, enthaltend
A) 10 bis 99 Gew.-% eines thermoplastischen Polyesters, verschieden von C)
B) 0,1 bis 30 Gew.-% eines Poly(ε-Caprolactons)
C) 0,1 bis 30 Gew.-% eines biologisch abbaubaren Polyesters, verschieden von B)
D) 0,1 bis 30 Gew.-% eines Phosphinsäuresalzes
E) 0 bis 20 Gew.-% eines stickstoffhaltigen Flammschutzmittels
F) 0 bis 15 Gew.-% eines aromatischen Phosphatesters mit mindestens einem alkylsubstituierten Phenylring
G) 0 bis 50 Gew.-% weiterer Zusatzstoffe,
wobei die Summe der Gewichtsprozente der Komponenten A) bis G) 100 % ergibt.

2. Thermoplastische Formmassen nach Anspruch 1, enthaltend
A) 10 bis 99 Gew.-%
B) 0,1 bis 30 Gew.-%
C) 0,1 bis 30 Gew.-%
D) 0,1 bis 30 Gew.-%
E) 0 bis 20 Gew.-%
F) 0,1 bis 15 Gew.-%
G) 0 bis 50 Gew.-%

3. Thermoplastische Formmassen nach den Ansprüchen 1 oder 2, in denen die Komponente D) aufgebaut ist aus Phosphinsäuresalzen der Formel (I) oder/und Diphosphinsäuresalzen der Formel (II) oder deren Polymeren. 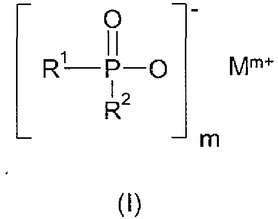 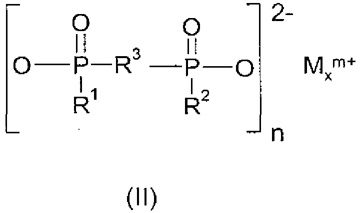 worin
R¹, R² gleich oder verschieden sind und Wasserstoff, linear oder verzweigt C₁-C₆-Alkyl, und/oder Aryl oder 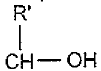
R' Wasserstoff, Phenyl, Tolyl
R³ linear oder verzweigt C₁-C₁₀-Alkylen, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4; n 1 bis 4; x 1 bis 4 bedeuten.

4. Thermoplastische Formmassen nach den Ansprüchen 1 bis 3, in denen R¹, R² der Komponente D) unabhängig voneinander Wasserstoff, Methyl und Ethyl bedeuten.

5. Thermoplastische Formmassen nach den Ansprüchen 1 bis 4, in denen die Komponente F) einen Schmelzpunkt, gemessen mittels DSC gemäß ISO 11357, 1. Aufheizkurve mit 20 K/Minute, von 50 bis 150 °C aufweist.

6. Thermoplastische Formmassen nach den Ansprüchen 1 bis 5, in denen die Komponente F) aufgebaut ist aus 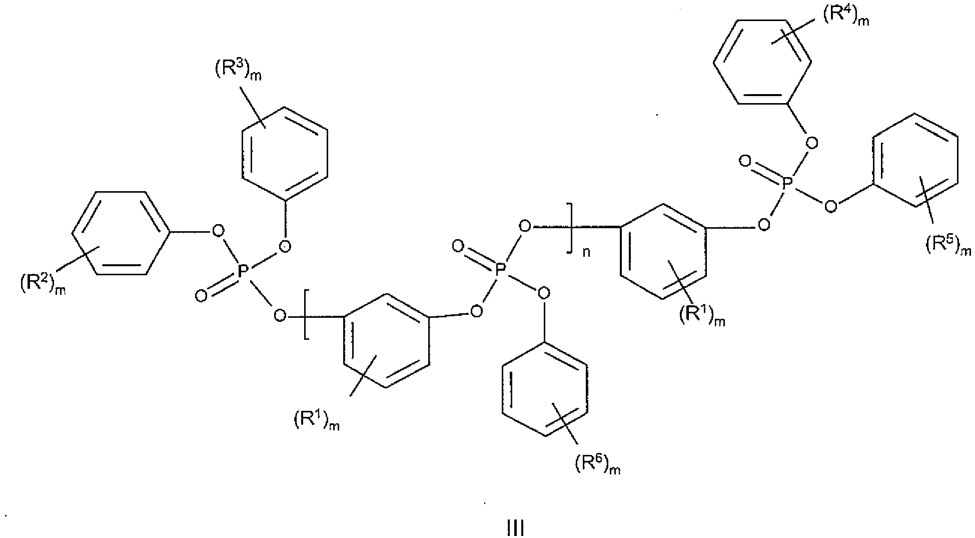 oder 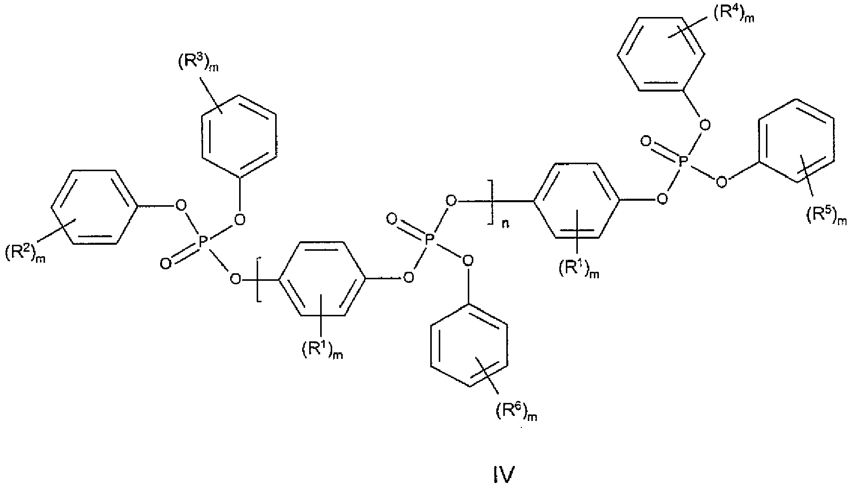 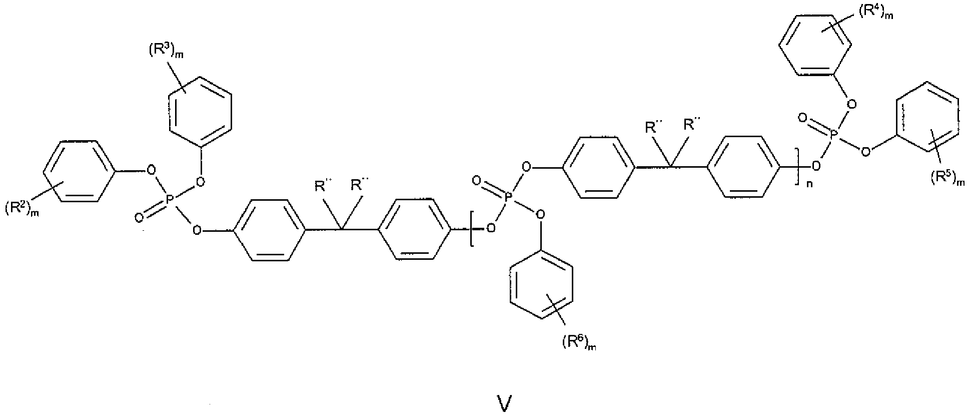 oder deren Mischungen,
wobei unabhängig voneinander
R¹ = H, Methyl oder Isopropyl
n = 0 bis 7
R²⁻⁶ = H, Methyl, Ethyl oder Isopropyl
m = 1 bis 5
R" = H, Methyl, Ethyl oder Cyclopropyl
bedeutet, mit der Maßgabe, dass mindestens ein Rest R² bis R⁶ ein Alkylrest ist.

7. Thermoplastische Formmassen nach den Ansprüchen 1 bis 6, in denen die Substituenten der allgemeinen Formel III, IV und V bedeuten:
R¹ Wasserstoff oder/und
R² bis R⁶ Methyl oder/und
m 1 bis 2

8. Thermoplastische Formmassen nach den Ansprüchen 1 bis 7, in denen die Komponente F) aus 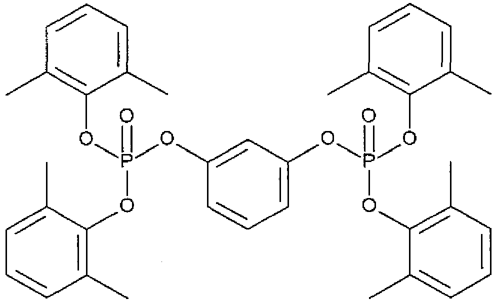 aufgebaut ist.

9. Thermoplastische Formmassen nach den Ansprüchen 1 bis 8, in denen die Komponente C) aufgebaut ist aus
C1) 30 bis 70 mol %, bezogen auf C1) und C2) einer aliphatischen Dicarbonsäure oder Mischungen davon,
C2) 30 bis 70 mol %, bezogen auf C1) und C2) einer aromatischen Dicarbonsäure oder Mischungen davon,
C3) 98,5 bis 100 mol %, bezogen auf C1) und C2) 1,4-Butandiol oder 1,3-Propandiol oder deren Mischungen,
C4) 0,05 bis 1,5 Gew.-%, bezogen auf C1) bis C3) eines Kettenverlängerers.

10. Verwendung von Polyesterformmassen gemäß den Ansprüchen 1 bis 9 zur Herstellung von Fasern, Folien und Formkörpern.

11. Fasern, Folien, Formkörper, erhältlich aus den Polyesterformmassen gemäß den Ansprüchen 1 bis 9.

## Claims

1. A thermoplastic molding composition comprising
A) from 10 to 99% by weight of a thermoplastic polyester differing from C)
B) from 0.1 to 30% by weight of a poly(ε-caprolactone)
C) from 0.1 to 30% by weight of a biodegradable polyester differing from B)
D) from 0.1 to 30% by weight of a phosphinic salt
E) from 0 to 20% by weight of a nitrogen-containing flame retardant
F) from 0 to 15% by weight of an aromatic phosphate ester having at least one alkyl-substituted phenyl ring
G) from 0 to 50% by weight of further additional substances,
where the sum of the percentages by weight of components A) to G) is 100%.

2. The thermoplastic molding composition according to claim 1, comprising
A) from 10 to 99% by weight
B) from 0.1 to 30% by weight
C) from 0.1 to 30% by weight
D) from 0.1 to 30% by weight
E) from 0 to 20% by weight
F) from 0.1 to 15% by weight
G) from 0 to 50% by weight.

3. The thermoplastic molding composition according to claim 1 or 2 in which component D) is composed of phosphinic salts of the formula (I) or/and diphosphinic salts of the formula (II) or of polymers of these 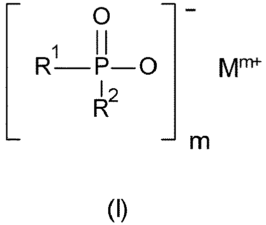 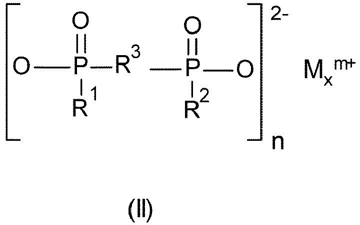 in which
R¹ and R², being identical or different, are hydrogen or, in linear or branched form, C₁-C₆-alkyl, and/or aryl or 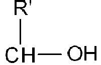
R' is hydrogen, phenyl, tolyl;
R³ is, in linear or branched form, C₁-C₁₀-alkylene or C₆-C₁₀-arylene, -alkylarylene or -arylalkylene;
M is Mg, Ca, Al, Sb, Sn, Ge, Ti, Zn, Fe, Zr, Ce, Bi, Sr, Mn, Li, Na, K and/or a protonated nitrogen base;
m is from 1 to 4; n is from 1 to 4; x is from 1 to 4.

4. The thermoplastic molding composition according to claims 1 to 3, in which R¹ and R² of component D) are mutually independently hydrogen, methyl or ethyl.

5. The thermoplastic molding composition according to claims 1 to 4, in which the melting point of component F), measured by means of DSC in accordance with ISO 11357, 1st heating curve at 20 K/minute, is from 50 to 150°C.

6. The thermoplastic molding composition according to claims 1 to 5, in which component F) is composed of 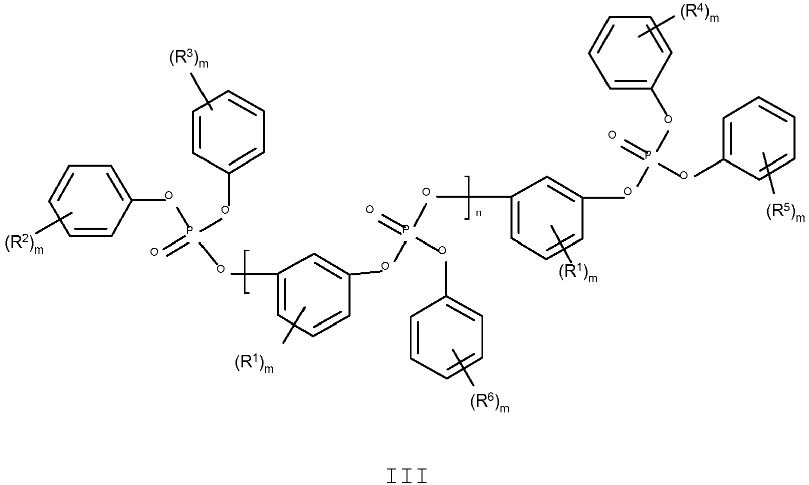 or 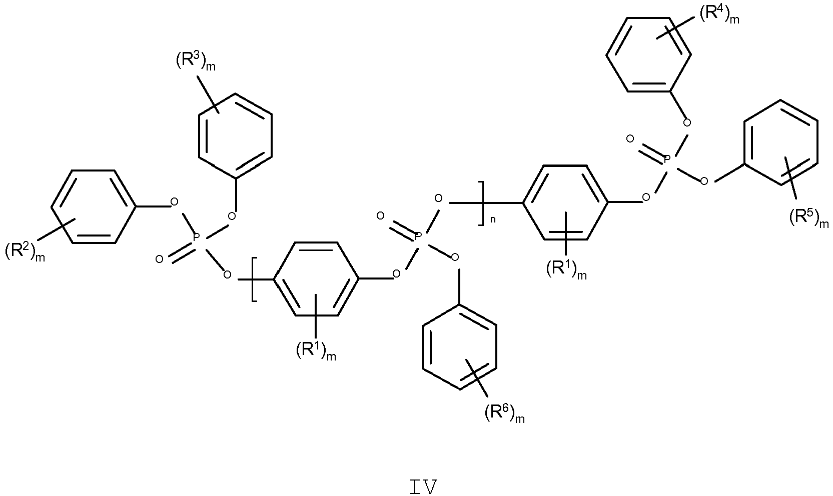 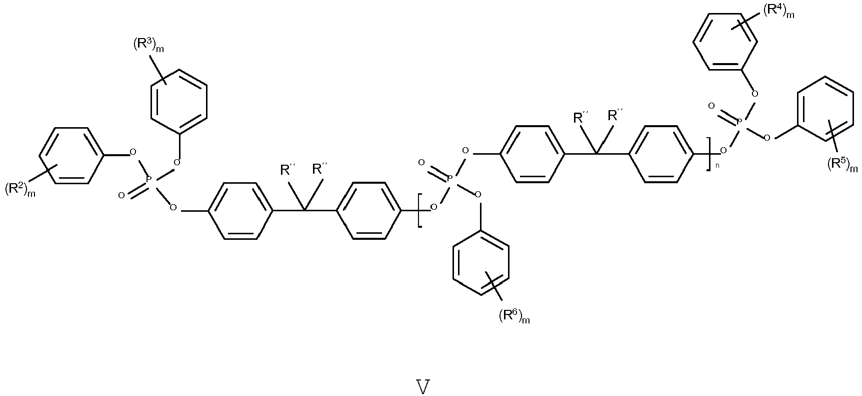 or a mixture of these,
where, mutually independently,
R¹ = H, methyl or isopropyl
n = from 0 to 7
R²⁻⁶ = H, methyl, ethyl or isopropyl
m = from 1 to 5
R" = H, methyl, ethyl or cyclopropyl,
with the proviso that at least one moiety R² to R⁶ is an alkyl moiety.

7. The thermoplastic molding composition according to claims 1 to 6, in which the substituents of the general formula III, IV and V are:
R¹ hydrogen or/and
R² to R⁶ methyl or/and
m is from 1 to 2.

8. The thermoplastic molding composition according to claims 1 to 7, in which component F) is composed of

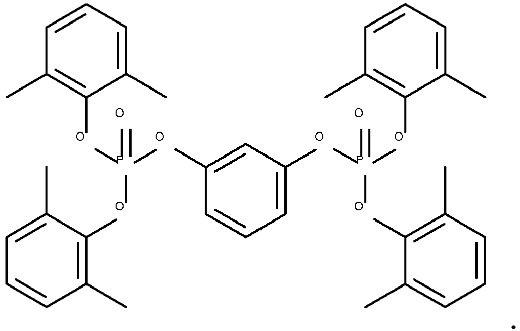

9. The thermoplastic molding composition according to claims 1 to 8, in which component C) is composed of
C1) from 30 to 70 mol%, based on C1) and C2), of an aliphatic dicarboxylic acid or mixture thereof,
C2) from 30 to 70 mol%, based on C1) and C2), of an aromatic dicarboxylic acid or mixture thereof,
C3) from 98.5 to 100 mol%, based on C1) and C2), of 1,4-butanediol or 1,3-propanediol or a mixture of these,
C4) from 0.05 to 1.5% by weight, based on C1) to C3), of a chain extender.

10. The use of polyester molding compositions according to claims 1 to 9 for the production of fibers, films and moldings.

11. A fiber, film, or molding, obtainable from the polyester molding compositions according to claims 1 to 9.

## Revendications

1. Masses à mouler thermoplastiques, contenant
A) 10 à 99 % en poids d'un polyester thermoplastique, différent de C)
B) 0,1 à 30 % en poids d'une poly(ε-caprolactone)
C) 0,1 à 30 % en poids d'un polyester biologiquement dégradable, différent de B)
D) 0,1 à 30 % en poids d'un sel d'acide phosphinique
E) 0 à 20 % en poids d'un agent ignifugeant contenant de l'azote
F) 0 à 15 % en poids d'un ester de phosphate aromatique comportant au moins un cycle phényle substitué par alkyle
G) 0 à 50 % en poids d'autres additifs,
la somme des pourcentages en poids des composants A) à G) étant de 100 %.

2. Masses à mouler thermoplastiques selon la revendication 1, contenant
A) 10 à 99 % en poids
B) 0,1 à 30 % en poids
C) 0,1 à 30 % en poids
D) 0,1 à 30 % en poids
E) 0 à 20 % en poids
F) 0,1 à 15 % en poids
G) 0 à 50 % en poids.

3. Masses à mouler thermoplastiques selon les revendications 1 ou 2, dans lesquelles le composant D) est composé de sels d'acide phosphinique de la formule (I) ou/et de sels d'acide diphosphinique de la formule (II) ou de leurs polymères 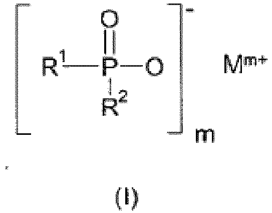 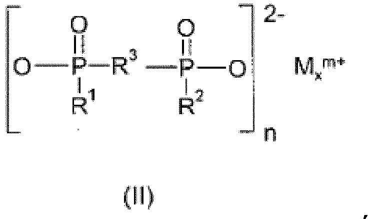 dans lesquelles
R¹, R² sont identiques ou différents et signifient hydrogène, C₁₋₆-alkyle linéaire ou ramifié, et/ou aryle ou 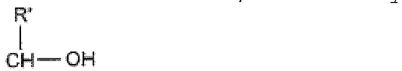
R' signifie hydrogène, phényle, tolyle
R³ signifie C₁₋₁₀-alkylène linéaire ou ramifié, C₆₋₁₀-arylène, C₆₋₁₀-alkylarylène ou C₆₋₁₀-arylalkylène ;
M signifie Mg, Ca, Al, Sb, Sn, Ge, Ti, Zn, Fe, Zr, Ce, Bi, Sr, Mn, Li, Na, K et/ou une base azotée protonée ;
m signifie 1 à 4 ; n signifie 1 à 4 ; x signifie 1 à 4.

4. Masses à mouler thermoplastiques selon les revendications 1 à 3, dans lesquelles R¹, R² du composant D) signifient indépendamment l'un de l'autre hydrogène, méthyle et éthyle.

5. Masses à mouler thermoplastiques selon les revendications 1 à 4, dans lesquelles le composant F) présente un point de fusion de 50 à 150 °C, mesuré par DSC selon la norme ISO 11357, 1. courbe d'échauffement avec 20 K/minute.

6. Masses à mouler thermoplastiques selon les revendications 1 à 5, dans lesquelles le composant F) est composé de 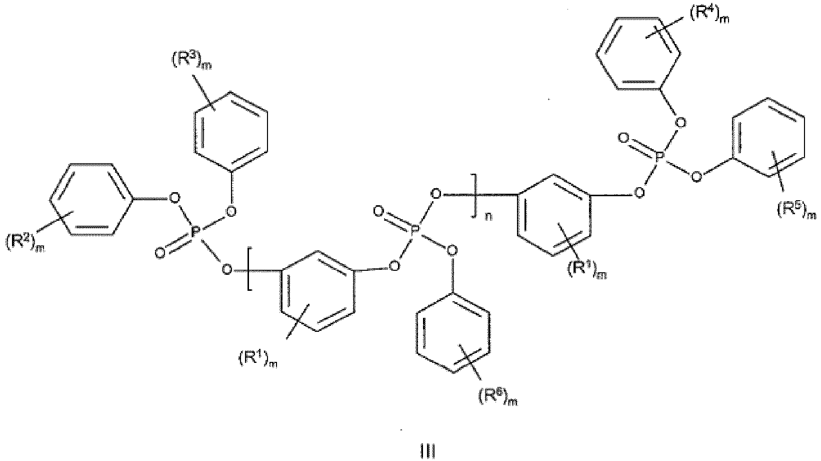 ou de 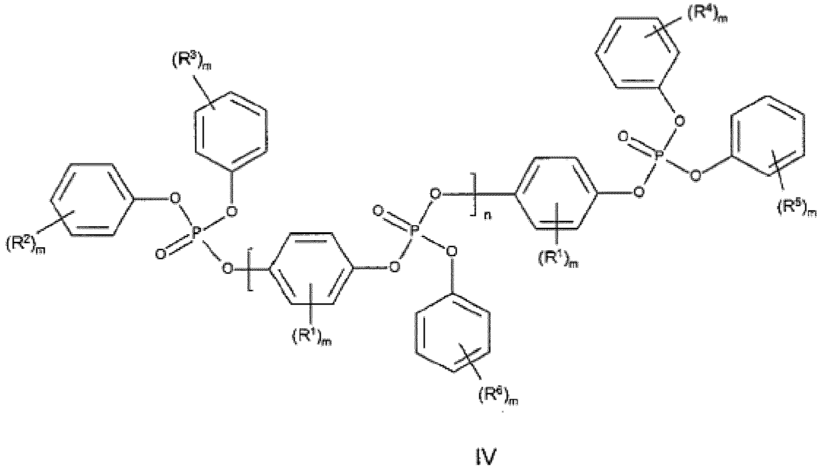 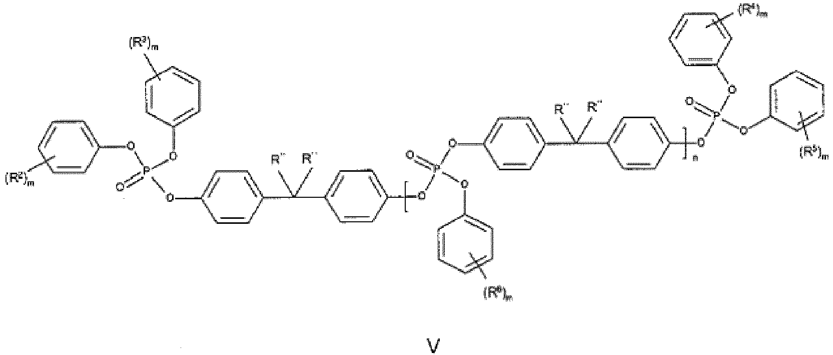 ou de leurs mélanges,
où indépendamment les uns des autres on a les significations
R¹ = H, méthyle ou isopropyle
n = 0 à 7
R²⁻⁶ = H, méthyle, éthyle ou isopropyle
m = 1 à 5
R" = H, méthyle, éthyle ou cyclopropyle,
étant entendu qu'au moins un radical R² à R⁶ est un radical alkyle.

7. Masses à mouler thermoplastiques selon les revendications 1 à 6, dans lesquelles les substituants des formules générales III, IV et V signifient :
R¹ hydrogène ou/et
R² à R⁶ méthyle ou/et
m 1 à 2.

8. Masses à mouler thermoplastiques selon les revendications 1 à 7, dans lesquelles le composant F) est composé de

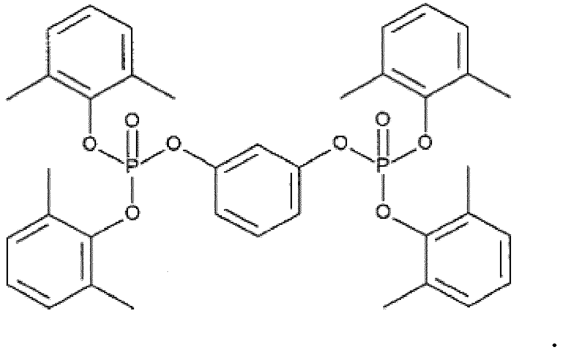

9. Masses à mouler thermoplastiques selon les revendications 1 à 8, dans lesquelles le composant C) est composé de
C1) 30 à 70 % en moles, par rapport à C1) et C2), d'un acide dicarboxylique aliphatique ou de mélanges correspondants,
C2) 30 à 70 % en moles, par rapport à C1) et C2), d'un acide dicarboxylique aromatique ou de mélanges correspondants,
C3) 98,5 à 100 % en moles, par rapport à C1) et C2), de 1,4-butanediol ou de 1,3-propanediol ou de mélanges correspondants,
C4) 0,05 à 1,5 % en poids, par rapport à C1) à C3), d'un agent d'extension de chaîne.

10. Utilisation de masses à mouler de polyester selon les revendications 1 à 9 pour la préparation de fibres, de feuilles et d'articles moulés.

11. Fibres, feuilles et articles moulés, pouvant être obtenus à partir des masses à mouler de polyester selon les revendications 1 à 9.
